# EUROPEAN PATENT APPLICATION

(11) **EP 3 054 020 A1**
(43) Date of publication of application: **10.08.2016**
(21) Application number: 14848098.1
(22) Date of filing: 08.09.2014
(51) Int. Cl.: C21D 9/40, C21D 1/10, C21D 1/42, H05B 6/10, H05B 6/44

(54) **HEAT TREATMENT METHOD FOR RING-SHAPED MEMBER AND HEAT TREATMENT EQUIPMENT FOR RING-SHAPED MEMBER**

(30) Priority: 30.09.2013 JP 2013204328
(71) Applicant: NTN Corporation, Osaka-shi, Osaka 550-0003 (JP)
(72) Inventor: HIRAOKA Tsuneaki, Iwata-shi Shizuoka 438-8510 (JP); HIRAYAMA Eri, Iwata-shi Shizuoka 438-8510 (JP); SUZUKI Shintaro, Iwata-shi Shizuoka 438-8510 (JP)
(74) Representative: Grünecker Patent- und Rechtsanwälte PartG mbB
(86) International application number: PCT/JP2014/073619
(87) International publication number: WO 2015/045824

(57) **Abstract**

In a heating step (S1) of inductively heating a steel ring-shaped member (R) to a target temperature, a plurality of ring-shaped members (R) retained by a retaining unit (3) coaxially with each other are caused to sequentially pass through an opposing region of a first heating coil (21) having a constant output, and through an opposing region of a second heating coil (22) having a variable output and being arranged coaxially with the first heating coil (21) on an exit side of the first heating coil (21). Thus, the plurality of ring-shaped members (R) are sequentially and inductively heated to the target temperature.

## Description

### Technical Field

The present invention relates to a heat treatment method for a ring-shaped member and a heat treatment apparatus for a ring-shaped member.

### Background Art

As is well known, in a process of manufacturing (mass-producing) a steel ring-shaped member such as a raceway ring of a rolling bearing or an outer joint member and an inner joint member of a constant velocity universal joint, heat treatment (quench hardening) is carried out on the ring-shaped member so as to impart required mechanical strength and the like to the ring-shaped member. The quench hardening involves a heating step of heating the ring-shaped member to a target temperature, and a cooling step of cooling the ring-shaped member heated to the target temperature. The heating step can be carried out using, for example, an atmosphere heating furnace such as a mesh belt continuous furnace.

The atmosphere heating furnace has an advantage of being capable of heating a large number of workpieces at the same time. However, the atmosphere heating furnace needs to heat not only a workpiece but also the atmosphere. Hence, the atmosphere heating furnace has a problem of low energy efficiency. In this context, in the heating step, a workpiece may be heated to the target temperature by induction heating (high-frequency induction heating) (for example, see Patent Literature 1). By the induction heating, a workpiece can be directly heated, thereby being capable of achieving high energy efficiency. Further, when a workpiece to be heated is a ring-shaped member, as described in Patent Literature 1, there may be adopted a method of energizing a heating coil under a state in which a plurality of ring-shaped members retained coaxially with each other are arranged in an opposing region (inner periphery) of the heating coil. In this method, the plurality of ring-shaped members can be inductively heated at the same time, thereby being capable of increasing efficiency of heat treatment.

### Citation List

Patent Literature 1: JP 2006-200019 A

### Summary of Invention

### Technical Problem

Incidentally, a continuous heating method involving continuously heating each longitudinal portion of a workpiece elongated in axial dimension (such as a billet) by moving the workpiece in an axial direction relatively to an energized heating coil has an advantage of being capable of efficiently soaking the elongated workpiece. Accordingly, the inventors of the present invention attempted to inductively heat ring-shaped members by the above-mentioned continuous heating method. Specifically, the inventors of the present invention attempted to sequentially and inductively heat a plurality of ring-shaped members to a target temperature by relatively moving, in the axial direction, the plurality of ring-shaped members retained coaxially with each other, and a heating coil energized so as to have a constant output.

However, in this way, of the plurality of ring-shaped members retained coaxially with each other, particularly one or a plurality of ring-shaped members arranged at an end on a heating start side and a heating finish side and at the vicinity of the end were overheated. It is difficult for the overheated ring-shaped members to keep desired mechanical strength and the like. Thus, the overheated ring-shapedmembers need to be disposed of. Therefore, there arises a problem of reduction in yield of products. Note that, the above-mentioned problem of overheating may arise for the following reason. Normally, in the continuous heating method, an output of the heating coil is set to a constant value capable of heating all of the ring-shaped members to a target temperature under a state in which the ring-shaped members are present in an entire opposing region of the heating coil (under a state in which an inner periphery of the heating coil is filled with the ring-shapedmembers). Accordingly, at a stage immediately after start of the heating step and a stage immediately before finish of the heating step, at which the ring-shaped members are only present in a part of the opposing region of the heating coil, amounts of induced currents generated in the respective ring-shaped members are increased, thereby overheating the ring-shaped members.

The above-mentioned problem of overheating can be avoided as much as possible by reducing the output of the heating coil. However, it is difficult to inductively heat, to the target temperature, all of the plurality of ring-shaped members aligned in the axial direction.

In view of the above-mentioned circumstances, it is an object of the present invention to provide a method and apparatus capable of efficiently quench-hardening a steel ring-shaped member and of properly carrying out the quench hardening while minimizing defective products.

### Solution to Problem

According to one embodiment of the present invention, which is devised to achieve the above-mentioned object, there is provided a heat treatment method for a ring-shapedmember, comprising a heating step of inductively heating a steel ring-shaped member to a target temperature, the heating step comprising causing a plurality of the steel ring-shaped members, which are retained coaxially with each other, to sequentially pass through an opposing region of a first heating coil having a constant output, and through an opposing region of a second heating coil having a variable output and being arranged coaxially with the first heating coil on an exit side of the first heating coil, to thereby sequentially and inductively heat the plurality of the steel ring-shaped members to the target temperature.

In this manner, when the plurality of ring-shapedmembers retained coaxially with each other are caused to pass through the opposing region of the second heating coil having the variable output, the plurality of ring-shaped members described above can be additionally and inductively heated. Further, for example, when states of the ring-shaped members heated by the first heating coil are intermittently or continuously monitored so that it is found out that the ring-shaped members are not heated to an expected temperature, the output of the second heating coil is adjusted as appropriate, thereby being capable of compensating a function of the first heating coil. Therefore, production of insufficiently-heated products can be effectively prevented.

Further, when the second heating coil having the variable output is arranged coaxially with the first heating coil having the constant output on the exit side of the first heating coil, as compared to the related-art method of inductively heating the ring-shaped members to the target temperature using a single heating coil, the output of the first heating coil can be reduced. Accordingly, of the plurality of ring-shaped members aligned in an axial direction, particularly one or a plurality of ring-shaped members arranged on a start side and a finish side of the heating step can be prevented from being overheated as much as possible. Further, when the output of the first heating coil can be reduced, a deterioration rate of the first heating coil can be reduced. Thus, there is also an advantage of being capable of reducing a maintenance cost.

On the other hand, the heating step is carried out by a so-called continuous heating method involving moving the plurality of ring-shaped members, which are retained coaxially with each other, relatively to the heating unit (first heating coil and second heating coil) in the axial direction. Accordingly, operations and effects attained by adopting the continuous heating method, specifically, for example, operations and effects capable of soaking the respective ring-shaped members, and of efficiently carrying out heat treatment can be effectively attained. Therefore, according to the one embodiment of the present invention, quench hardening of the steel ring-shaped members can be efficiently carried out, and can be properly carried out while minimizing defective products.

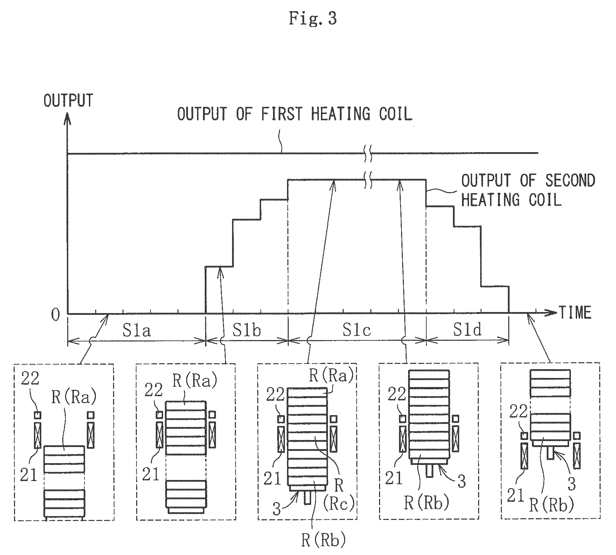

As a specific measure for effectively attaining the operations and effects described above, it is conceivable that the heating step comprises: an output increasing step of increasing the output of the second heating coil in a stepped manner; and an output decreasing step of decreasing the output of the second heating coil in a stepped manner. In this case, it is preferred that an output increase pattern of the second heating coil in the output increasing step and an output decrease pattern of the second heating coil in the output decreasing step be different from each other. This is because an electric conductivity and magnetism of a workpiece to be heated change along with temperature rise (a temperature rise pattern of the workpiece changes in accordance with a degree of progress of the heating step). Note that, the description "the output increase pattern of the second heating coil in the output increasing step and the output decrease pattern of the second heating coil in the output decreasing step are different from each other" means that the two output patterns of the second heating coil in the both steps do not conform to each other when any one of the output patterns is reversed horizontally and then superposed on another one of the output patterns (for example, see FIG. 3).

In the above-mentioned configuration, a retaining unit configured to retain the plurality of the steel ring-shaped members coaxially with each other may be arranged, and the output of the second heating coil may be set in accordance with an axial relative position of the retaining unit with respect to the first heating coil. Thus, the output of the second heating coil can be properly and easily set in accordance with the degree of progress of the heating step.

In the above-mentioned configuration, when the first heating coil and the second heating coil are connected to separate high-frequency power sources, respectively, the output of each of the heating units can be easily set to an appropriate value, thereby increasing versatility.

The heat treatment method according to the one embodiment of the present invention may further comprise a cooling step of cooling the steel ring-shapedmember inductively heated to the target temperature. With this, the ring-shaped members can be properly quench-hardened.

The heat treatment method according to the one embodiment of the present invention is applicable to a case of heat-treating a ring-shaped member made of, for example, a steel material having a carbon content of less than 0.8 mass%.

Further, the above-mentioned object may be achieved by a heat treatment apparatus for a ring-shaped member, comprising: a heating unit configured to inductively heat a steel ring-shaped member to a target temperature; a retaining unit configured to retain the steel ring-shaped members coaxially with each other; and a driver configured to move the retaining unit in an axial direction of each of the steel ring-shaped members relatively to the heating unit, the heating unit comprising: a first heating coil having a constant output; and a second heating coil having a variable output and being arranged coaxially with the first heating coil on an exit side of the first heating coil, the driver being configured to move the retaining unit in the axial direction relatively to the heating unit so as to cause a plurality of the steel ring-shaped members, which are retained by the retaining unit coaxially with each other, to sequentially pass through an opposing region of the first heating coil and an opposing region of the second heating coil.

### Advantageous Effects of Invention

As described above, according to the embodiments of the present invention, it is possible to efficiently quench-harden the steel ring-shaped member and to properly carry out the quench hardening while minimizing defective products. Thus, itispossible to reduce a manufacturing cost of the steel ring-shaped member such as a raceway ring of a rolling bearing.

### Brief Description of Drawings

FIG. 1 is a schematic view for illustrating an initial state of a heat treatment apparatus to be used when carrying out a heat treatment method according to the present invention.
FIG. 2 is a flowchart for illustrating steps of quench hardening.
FIG. 3 is a graph for showing settings of outputs of a first heating coil and a second heating coil to be used in a heating step.
FIG. 4 is a schematic view for illustrating an in-use state of the heat treatment apparatus illustrated in FIG. 1.
FIG. 5 is a table for showing results of comparative verification between the related-art method and the method according to the present invention.

### Description of Embodiments

Now, an embodiment of the present invention is described with reference to the drawings.

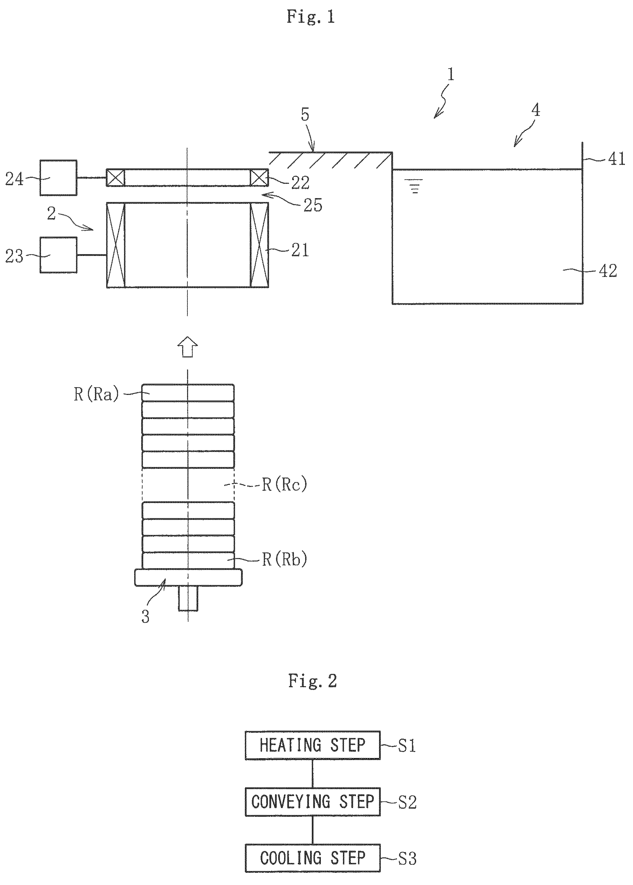

FIG. 1 is a schematic view for illustrating an initial state of a heat treatment apparatus to be used when carrying out a heat treatment method for a ring-shaped member according to the present invention. A heat treatment apparatus 1 illustrated in FIG. 1 is a heat treatment apparatus configured to quench-harden a steel ring-shaped member R (such as an outer ring of a rolling bearing), and sequentially carries out a heating step S1, a conveying step S2, and a cooling step S3 illustrated in FIG. 2 on the ring-shaped member R. The heat treatment apparatus 1 comprises a heating unit 2 and a retaining unit 3 to be used in the heating step S1, a conveyor 5 to be used in the conveying step S2, and a cooling unit 4 to be used in the cooling step S3. The heating unit 2 and the retaining unit 3 are arranged coaxially with each other.

The retaining unit 3 can retain a plurality of ring-shaped members R coaxially thereon. The retaining unit 3 according to this embodiment retains the plurality of ring-shaped members R in a vertically stacked state so that center axes of the ring-shaped members R are aligned. In the initial state of the heat treatment apparatus 1 illustrated in FIG. 1, the retaining unit 3 and the plurality of ring-shaped members R retained coaxially by the retaining unit 3 are arranged vertically below the heating unit 2 at a predetermined distance from the heating unit 2. The retaining unit 3 is movable in an axial direction relatively to the heating unit 2. In this embodiment, the retaining unit 3 is connected to a driver (not shown) such as a hydraulic cylinder, and the retaining unit 3 is pitch-fed or continuously fed in accordance with an output of the driver.

The heating unit 2 comprises a first heating coil 21 and a second heating coil 22 aligned vertically and arranged coaxially with each other. Both of the coils 21 and 22 can surround the ring-shaped member R to be heated from a radially outer side of the ring-shaped member R. The first heating coil 21 is arranged on a relatively lower side, whereas the second heating coil 22 is arranged on a relatively upper side (exit side of the first heating coil 21). As the first heating coil 21, there is used a coil having a dimension larger than an axial dimension of the ring-shaped member R to be heated. Specifically, as the first heating coil 21, when L represents the axial dimension of the ring-shaped member R to be heated, a coil having an axial dimension satisfying Lxn (where n is equal to or larger than two) is used. In this embodiment, a coil having an axial dimension satisfying L×5 is used. On the other hand, as the second heating coil 22, there is used a coil having an axial dimension substantially equal to the axial dimension L of the ring-shaped member R. Both of the coils 21 and 22 are electrically connected to high-frequency power sources 23 and 24, respectively. As described above, when the first heating coil 21 and the second heating coil 22 are electrically connected to the separate high-frequency power sources, respectively, an output of each of the coils 21 and 22 can be easily set to an arbitrary value, thereby increasing versatility.

As shown in FIG. 3, the output of the first heating coil 21 is constant while the heating step S1 is carried out. In this case, the output of the first heating coil 21 is set so that the ring-shaped member R, which is to be heated to the highest temperature when the plurality of ring-shaped members R are sequentially heated, is heated to a target temperature (to a predetermined temperature equal to or higher than an A₁ transformation point in this case) in such a manner that the plurality of ring-shaped members R retained coaxially with each other, and the energized first heating coil 21 are moved relatively (in the axial direction). Note that, normally, the ring-shaped member R to be heated to the highest temperature is arranged at an end on a heating start side (upper end), at an end on a heating finish side (lower end), and at the vicinity of the end on the heating start side or the heating finish side.

On the other hand, the output of the second heating coil 22 is set so as to vary in accordance with an axial relative position of the retaining unit 3 with respect to the heating unit 2 while the heating step S1 is carried out. In this case, the output of the second heating coil 22 is set and controlled so that the ring-shaped member R can be heated to a temperature range equal to or higher than an A₃ transformation point (more specifically, to a predetermined temperature equal to or higher than the A₃ transformation point, and capable of preventing metal structure of the ring-shaped member R from becoming rough and brittle). As shown in FIG. 3, the heating step S1 comprises an initial step S1a of setting the output of the second heating coil 22 to zero, an output increasing step S1b of increasing the output of the second heating coil 22 in a stepped manner, an intermediate step S1c of keeping the output of the second heating coil 22 to a constant value, and an output decreasing step S1d of decreasing the output of the second heating coil 22 in a stepped manner until the output of the second heating coil 22 is decreased to zero.

The timings for carrying out the above-mentioned steps S1a to S1d in this embodiment are described in detail. The initial step S1a is continued from start of the heating step S1 until a ring-shaped member Ra (foremost ring-shaped member Ra) arranged at the end on the heating start side almost reaches a lower end portion of the second heating coil 22. The output increasing step S1b is carried out after the foremost ring-shapedmember Ra is started to enter an opposing region of the second heating coil 22 until a ring-shaped member Rc arranged at substantially an axial center position among the plurality of ring-shaped members R reaches an axial center portion of the first heating coil 21. Further, the intermediate step S1c is carried out continuously until a ring-shaped member Rb arranged at the end on the heating finish side enters an opposing region of the first heating coil 21. Then, the output decreasing step S1d is carried out until all of the ring-shaped members R pass through the opposing region of the first heating coil 21 (until the ring-shaped member Rb is discharged to an upper side of the first heating coil 21).

An output increase pattern of the second heating coil 22 in the output increasing step S1b and an output decrease pattern of the second heating coil 22 in the output decreasing step S1d are set to be different from each other. That is, as schematically shown in FIG. 3, the output patterns of the second heating coil 22 in the both steps S1b and S1d do not conform to each other when any one of the output patterns is reversed horizontally and then superposed on another one of the output patterns. Assuming that the output of the second heating coil 22 in the intermediate step S1c is 100%, the output of the second heating coil 22 in the output increasing step S1b is set to increase in a stepped manner in the order of 35%, 70%, and 85%. In contrast, the output of the second heating coil 22 in the output decreasing step S1d is set to decrease in a stepped manner in the order of 80%, 65%, and 20%. Note that, the above-mentioned variationmode of the output of the second heating coil 22 is merely an example. The variation mode may be modified as appropriate depending on a shape, a size, and the like of the ring-shaped member to be heated.

The above-mentioned variation mode of the output of the second heating coil 22 can be determined based on a difference between the target temperature and an actual measurement temperature that is obtained in such a manner that, for example, prior to mass production of the ring-shaped members R, a temperature of the ring-shaped member R heated by the first heating coil 21 is experimentally measured by a radiation thermometer arranged at the vicinity of the exit of the first heating coil 21.

A mutual induction preventing part 25 is interposed between the first heating coil 21 and the second heating coil 22 so as to prevent occurrence of mutual induction when energizing both of the coils 21 and 22. In this embodiment, an air gap is adopted as the mutual induction preventing part 25. That is, the first heating coil 21 and the second heating coil 22 are arranged at a predetermined distance from each other so as not to cause mutual induction. Note that, a shield member may be adopted as the mutual induction preventing part 25.

The cooling unit 4 comprises a cooling liquid bath 41 configured to store therein a cooling liquid (such as a quenching oil) 42 kept at an appropriate temperature. The heat treatment apparatus 1 further comprises the conveyor 5 configured to convey, into the cooling liquid bath 41, the ring-shaped member R heated to the target temperature by the heating unit 2.

Now, description is made of procedures of quench-hardening the ring-shaped member R, which are carried out using the above-mentioned heat treatment apparatus 1.

Prior to carrying out the quench hardening, a step of manufacturing the ring-shaped member is carried out, thereby preparing and manufacturing the ring-shaped member R. In this case, a steel material having a carbon content of less than 0.8 mass% (such as S45C and S53C classified as carbon steel for machine structural use specified in JIS G4051) is prepared, and the steel material is subjected to plastic working such as forging, and to machining such as turning. Thus, the ring-shaped member R having a predetermined shape is manufactured.

Next, the quench hardening is carried out using the above-mentioned heat treatment apparatus 1. As illustrated in FIG. 2, the quench hardening comprises the heating step S1 of inductively heating, to the target temperature, the ring-shaped member R manufactured in the step of manufacturing the ring-shaped member, the conveying step S2 of conveying, into the cooling unit 4 (cooling liquid bath 41), the ring-shaped member R heated to the target temperature, and the cooling step S3 of cooling and quench-hardening the ring-shaped member R.

### (A) Heating Step S1

In the heating step S1, the plurality of ring-shaped members R retained coaxially by the retaining unit 3 are sequentially heated to the target temperature (to a temperature range exceeding the A₃ transformation point in this case). Specifically, first, the plurality of ring-shaped members R are stacked vertically on the retaining unit 3 so that the center axes of the ring-shaped members R are aligned. Each ring-shaped member R has the axial dimension smaller than a radial dimension thereof. Accordingly, when the ring-shaped members R are stacked vertically as in this embodiment, there is an advantage in that postures of the ring-shaped members R are stabilized while carrying out the heating step S1. Although detailed illustration is omitted, work of vertically stacking the plurality of ring-shaped members R can be carried out automatically.

When the driver (not shown) is operated to apply a force of feeding the retaining unit 3 vertically upward, the plurality of ring-shaped members R retained coaxially by the retaining unit 3 sequentially enter the opposing region of the first heating coil 21 and the opposing region of the second heating coil 22. As shown in FIG. 3, after start of the heating step S1, electric power supplied from the high-frequency power source 23 causes a high-frequency current to flow through the first heating coil 21. The supply of electric power from the high-frequency power source 23 to the first heating coil 21 is continued until all of the ring-shaped members R are discharged to the upper side of the first heating coil 21 after passing through the opposing region of the first heating coil 21. Note that, the supply of electric power from the high-frequency power source 23 to the first heating coil 21 may be started the moment that the foremost ring-shaped member Ra of the plurality of ring-shaped members R retained by the retaining unit 3 enters the opposing region of the first heating coil 21, or may be started immediately before the foremost ring-shaped member Ra enters the opposing region of the first heating coil 21. Further, in order to obtain the output pattern shown in FIG. 3, electric power is supplied from the high-frequency power source 24 to the second heating coil 22. Each of the ring-shaped members R is heated to a predetermined temperature exceeding the A₁ transformation point while passing through the opposing region of the first heating coil 21, and then heated to a temperature exceeding the A₃ transformation point while passing through the opposing region of the second heating coil 22.

### (B) Conveying Step S2

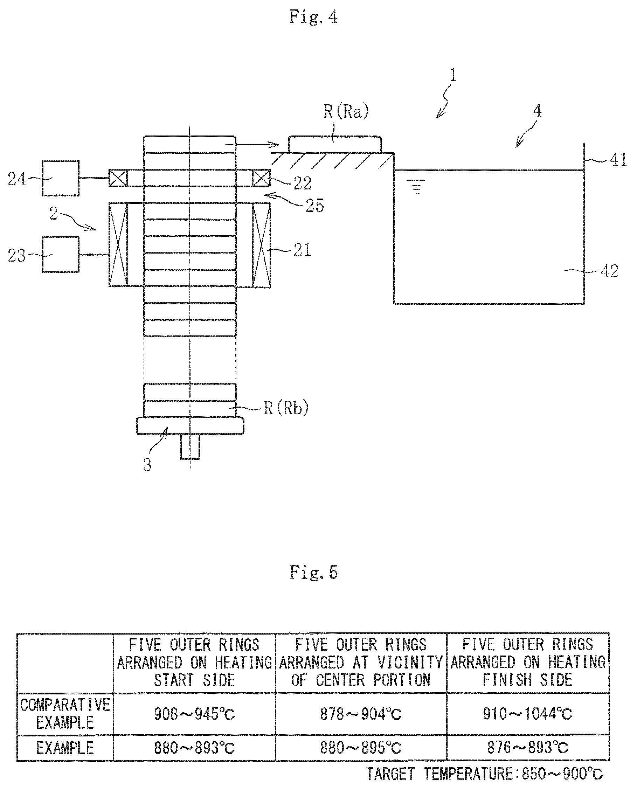

In the conveying step S2, as illustrated in FIG. 4, the ring-shaped members R heated to the target temperature are sequentially conveyed by the conveyor 5 into the cooling unit 4 (cooling liquid bath 41).

### (C) Cooling Step S3

In the cooling step S3, the ring-shaped member R conveyed by the conveyor 5 into the cooling liquid bath 41 is immersed in the cooling liquid 42 stored in the cooling liquid bath 41. Thus, the ring-shaped member R is cooled from the temperature range equal to or higher than the A₃ transformation point to a temperature range equal to or lower than an Ms point, thereby being quench-hardened.

Through the above-mentioned procedures, the quench hardening of the ring-shaped member R using the heat treatment apparatus 1 is completed. Then, the ring-shaped member R after completion of the quench hardening is subjected to predetermined processes such as tempering and various kinds of finishing, thereby being formed into a finished product.

As described above, according to the present invention, in the heating step S1, the plurality of ring-shapedmembers R retained coaxially with each other are caused to pass through the opposing region of the first heating coil 21 having the constant output (first heating coil 21 energized so as to keep the constant output), and through the opposing region of the second heating coil 22 having a variable output and being arranged coaxially with the first heating coil 21 on the exit side of the first heating coil 21. Thus, the plurality of ring-shaped members R are sequentially heated to the target temperature. In this manner, when the plurality of ring-shaped members R are caused to pass through the opposing region of the second heating coil 22 having the variable output, the ring-shaped members R can be additionally and inductively heated. Accordingly, the ring-shaped members R can be prevented from being heated insufficiently as much as possible. Further, when the second heating coil 22 having the variable output is arranged coaxially with the first heating coil 21 having the constant output on the exit side of the first heating coil 21, as compared to a method of inductively heating the ring-shaped member using a single heating coil f romnormal temperature to the target temperature, it is possible to reduce the output of the first heating coil 21, that is, it is possible to reduce amounts of induced currents generated in the ring-shaped members R when the ring-shaped members R pass through the opposing region of the first heating coil 21. Accordingly, of the plurality of ring-shaped members R retained to be aligned in the axial direction, particularly one or a plurality of ring-shaped members R arranged on the heating start side and on the heating finish side can be prevented frombeing overheated as much as possible. Further, when the output of the first heating coil 21 can be reduced, a deterioration rate of the first heating coil 21 can be reduced. Thus, there is also an advantage of being capable of reducing a maintenance cost.

Particularly in this embodiment, the heating step S1 comprises the output increasing step S1b of increasing the output of the second heating coil 22 in a stepped manner, and the output decreasing step S1d of decreasing the output of the second heating coil 22 in a stepped manner after the output increasing step S1b. In this way, of the plurality of ring-shaped members R retained coaxially with each other, particularly one or a plurality of ring-shaped members R arranged on the heating start side and on the heating finish side can be effectively prevented from being overheated. In addition, the output increase pattern of the second heating coil 22 in the output increasing step S1b and the output decrease pattern of the second heating coil 22 in the output decreasing step S1d are different from each other. With this, all of the ring-shaped members R retained coaxially with each other can be heated to the target temperature. Note that, the reason why the output increase pattern and the output decrease pattern of the second heating coil 22 are different from each other is that an electric conductivity and magnetism of a workpiece to be inductively heated change along with temperature rise, that is, a temperature rise pattern of the workpiece changes in accordance with a degree of progress of the heating step. In short, even when the number of the ring-shaped members R arranged in the opposing region of the first heating coil 21 is the same, the ring-shaped members R arranged at a position relatively close to the heating start side and the ring-shaped members R arranged at a position relatively close to the heating finish side differ from each other in temperature rise pattern.

On the other hand, the heating step S1 is carried out by a so-called continuous heating method involving moving the plurality of ring-shaped members R, which are retained coaxially with each other, relatively to the heating unit 2 (first heating coil 21 and second heating coil 22) in the axial direction. Accordingly, operations and effects attained by adopting the continuous heating method, specifically, for example, operations and effects capable of soaking the respective ring-shaped members R, and of efficiently carrying out the heating step S1 can be effectively attained. Therefore, according to the present invention, the quench hardening of the steel ring-shaped member R, such as an outer ring of a rolling bearing, can be efficiently carried out, and can be properly carried out while minimizing defective products.

In this case, normally, heat treatment is carried out on a steel material such as S45C having a carbon content of less than 0.8 mass% in such a manner that all carbon is simply melted into iron structure. Thus, it is unnecessary to control a melting amount of carbon. Accordingly, the heating method according to this embodiment, which comprises heating the ring-shaped member R by the first heating coil 21 to the temperature range equal to or higher than the A₁ transformation point, and then heating the ring-shaped member R by the second heating coil 22 to the temperature range equal to or higher than the A₃ transformation point, is suited as a method of heating, to the target temperature, the ring-shaped member R made of the steel material having the carbon content of less than 0.8 mass%.

However, the heat treatment method according to the present invention is also applicable to a case of heat-treating a ring-shaped member R made of a steel material having a carbon content of 0.8 mass% or more, such as bearing steel typified by SUJ2 and SUJ3 specified in JIS G4805, or tool steel typified by SKD11, SKD12, SKD3 and SKD31 specified in JIS G4404. In this case, similarly to the above-mentioned method, the ring-shaped member R may be heated by the first heating coil 21 to a predetermined temperature equal to or higher than the A₁ transformation point, and then the ring-shaped member R may be heated by the second heating coil 22 to a predetermined temperature equal to or higher than the A₃ transformation point. Alternatively, the outputs of the first heating coil 21 and the second heating coil 22 may be controlled so as to heat the ring-shaped member R by the second heating coil 22 to the predetermined temperature equal to or higher than the A₁ transformation point.

An example of the embodiment of the present invention is described above in detail, but the embodiment of the present invention is not limited to that described above.

In a case where it is difficult to heat the insufficiently-heated ring-shaped member R to the target temperature using the single second heating coil 22 having a small axial dimension, for example, a case where the ring-shaped member R to be heated has a large size (large thickness), or a case where relative moving speed of the retaining unit 3 with respect to the heating unit 2 is high, two or more second heating coils 22 may be arranged coaxially with each other.

Further, in the above-mentioned embodiment, the output of the second heating coil 22 is varied in a preset pattern. However, for example, even during mass production of the ring-shaped members R, a radiation thermometer may be arranged on the exit side of the first heating coil 21, and the output of the second heating coil 22 may be varied as appropriate based on a temperature of the ring-shaped member R measured at the vicinity of the exit of the first heating coil 21. In this manner, production of insufficiently-heated products can be further effectively prevented.

Further, in the above-mentioned embodiment, the plurality of ring-shaped members R are sequentially and inductively heated to the target temperature, and the ring-shaped members R inductively heated to the target temperature are sequentially sent to the conveying step S2 and to the cooling step S3. However, the conveying step S2 and the cooling step S3 may be collectively carried out on the plurality of ring-shaped members R inductively heated to the target temperature.

Further, in the above-mentioned embodiment, the direction of relatively moving the heating unit 2 and the retaining unit 3 (plurality of ring-shaped members R retained by the retaining unit 3 to be aligned in the axial direction) is set to the vertical direction, but the present invention is also applicable to a case where the heating unit 2 and the retaining unit 3 are relatively moved in a horizontal direction.

Further, the heat treatment method according to the present invention is suitably applicable not only to the case of heat-treating the outer ring of a rolling bearing, but also to a case of heat-treating steel ring-shaped members such as an inner ring of a rolling bearing, a sliding bearing, an outer joint member and an inner joint member constructing a constant velocity universal joint, and a cage incorporated into a rolling bearing or a constant velocity universal joint.

### Example

In order to demonstrate usefulness of the present invention, comparative verification was conducted on whether or not there was a difference in modes of heating a plurality of ring-shaped members between a case of inductively heating the plurality of ring-shaped members using the related-art method, and a case of inductively heating the plurality of ring-shaped members using the method according to the present invention. Here, the related-art method was carried out in such a manner that the plurality of ring-shaped members retained coaxially with each other were moved relative to a single heating coil having a constant output in an axial direction, thereby sequentially and inductively heating the plurality ofring-shaped members to a target temperature. The method according to the present invention was carried out using the heat treatment apparatus 1 illustrated in FIG. 1 and the like. Note that, in the comparative tests, in order to heat fifteen outer rings of a rolling bearing, which were made of SUJ2 and retained to be aligned in the axial direction, to a temperature range of from 850°C to 900°C, outputs of coils (single heating coil in the related-art method, and first heating coil and second heating coil in the method according to the present invention) were set as appropriate. Then, of the plurality of outer rings retained to be aligned in the axial direction, temperatures of five outer rings arranged on the heating start side, temperatures of five outer rings arranged at the vicinity of a center portion, and temperatures of five outer rings arranged on the heating finish side weremeasured after completion of induction heating. The results of measurement are shown in FIG. 5.

As is apparent from FIG. 5, in the related-art method (Comparative Example), only the outer rings arranged at the vicinity of the center portion were heated to the target temperature, whereas all of the outer rings arranged on the heating start side and the outer rings arranged on the heating finish side were heated to temperatures exceeding the target temperature. In contrast, in the method according to the present invention (Example), all of the outer rings arranged on the heating start side, at the vicinity of the center portion, and on the heating finish side were heated within the range of the target temperature. Therefore, usefulness of the present invention was demonstrated.

### Reference Signs List

- 1: heat treatment apparatus

- 2: heating unit
- 3: retaining unit
- 4: cooling unit
- 21: first heating coil
- 22: second heating coil
- 23: high-frequency power source
- 24: high-frequency power source
- R: steel ring-shaped member
- Ra: ring-shaped member arranged at end on heating start side
- Rb: ring-shaped member arranged at end on heating finish side
- S1: heating step
- S1a: initial step
- S1b: output increasing step
- S1c: intermediate step
- S1d: output decreasing step
- S3: cooling step

## Claims

1. A heat treatment method for a ring-shapedmember, comprising a heating step of inductively heating a steel ring-shaped member to a target temperature,
the heating step comprising causing a plurality of the steel ring-shaped members, which are retained coaxially with each other, to sequentially pass through an opposing region of a first heating coil having a constant output, and through an opposing region of a second heating coil having a variable output and being arranged coaxially with the first heating coil on an exit side of the first heating coil, to thereby sequentially and inductively heat the plurality of the steel ring-shapedmembers to the target temperature.

2. The heat treatment method for a ring-shapedmember according to claim 1,
wherein the heating step comprises:
an output increasing step of increasing the output of the second heating coil in a stepped manner; and
an output decreasing step of decreasing the output of the second heating coil in a stepped manner.

3. The heat treatment method for a ring-shapedmember according to claim 2, wherein an output increase pattern of the second heating coil in the output increasing step and an output decrease pattern of the second heating coil in the output decreasing step are different from each other.

4. The heat treatment method for a ring-shapedmember according to any one of claims 1 to 3, further comprising a retaining unit configured to retain the plurality of the steel ring-shaped members coaxially with each other,
wherein the output of the second heating coil is varied in accordance with an axial relative position of the retaining unit with respect to the first heating coil.

5. The heat treatment method for a ring-shapedmember according to any one of claims 1 to 4, wherein the first heating coil and the second heating coil are electrically connected to separate high-frequency power sources, respectively.

6. The heat treatment method for a ring-shapedmember according to any one of claims 1 to 5, further comprising a cooling step of cooling the steel ring-shaped member inductively heated to the target temperature.

7. The heat treatment method for a ring-shaped member according to any one of claims 1 to 6, wherein the steel ring-shaped member is made of a steel material having a carbon content of less than 0.8 mass%.

8. A heat treatment apparatus for a ring-shaped member, comprising:
a heating unit configured to inductively heat a steel ring-shaped member to a target temperature;
a retaining unit configured to retain the steel ring-shaped members coaxially with each other; and
a driver configured to move the retaining unit in an axial direction of each of the steel ring-shaped members relatively to the heating unit,
the heating unit comprising:
a first heating coil having a constant output; and
a second heating coil having a variable output and being arranged coaxially with the first heating coil on an exit side of the first heating coil,
the driver being configured to move the retaining unit in the axial direction relatively to the heating unit so as to cause a plurality of the steel ring-shaped members, which are retained by the retaining unit coaxially with each other, to sequentially pass through an opposing region of the first heating coil and an opposing region of the second heating coil.
